**Europäisches Patentamt**

**European Patent Office**

**Office européen des brevets**

(19)

(11) **EP 1 174 243 B1**

(12) **EUROPÄISCHE PATENTSCHRIFT**

(45) Veröffentlichungstag und Bekanntmachung des Hinweises auf die Patenterteilung:
**08.06.2005  Patentblatt 2005/23**

(51) Int Cl.⁷: **B29C 47/00**, B29C 55/28, A22C 13/00 // B29K1:00

(21) Anmeldenummer: **01116687.3**

(22) Anmeldetag: **17.07.2001**

(54) **Verfahren zur Herstellung eines nahtlosen Folienschlauches und nahtloser Folienschlauch**

Process for manufacturing a seamless tubular film and seamless tubular film

Procédé de fabrication d'une feuille tubulaire sans soudure et feuille tubulaire sans soudure

(84) Benannte Vertragsstaaten:
**AT BE DE ES FI FR GB**

(30) Priorität: **22.07.2000  DE 10035798**

(43) Veröffentlichungstag der Anmeldung:
**23.01.2002  Patentblatt 2002/04**

(73) Patentinhaber: **Kalle GmbH**
**65203 Wiesbaden (DE)**

(72) Erfinder:
 • **Gord, Herbert, Dipl.-Ing.**
  **55218 Ingelheim (DE)**
 • **Hammer, Klaus-Dieter, Dr.**
  **55120 Mainz (DE)**
 • **Neeff, Rainer, Dr.**
  **65203 Wiesbaden (DE)**
 • **Berghof, Klaus, Dipl.-Chemiker**
  **07407 Rudolstadt-Schwarza (DE)**
 • **Eilers, Markus, Dipl.-Ing.**
  **07407 Rudolstadt-Schwarza (DE)**
 • **Maron, Reinhard, Dr.**
  **07407 Rudolstadt-Schwarza (DE)**

(74) Vertreter: **Zounek, Nikolai, Dipl.-Ing. et al**
**Patentanwaltskanzlei Zounek,**
**Industriepark Kalle-Albert,**
**Gebäude H 391,**
**Rheingaustrasse 190-196**
**65174 Wiesbaden (DE)**

(56) Entgegenhaltungen:
| | |
|---|---|
| WO-A-00/23249 | WO-A-00/23250 |
| WO-A-96/34037 | WO-A-97/31970 |
| WO-A-98/42492 | GB-A- 304 754 |
| GB-A- 1 002 752 | US-A- 3 822 333 |
| US-A- 4 164 536 | US-A- 6 033 618 |

EP 1 174 243 B1

**Beschreibung**

Die Erfindung betrifft ein Verfahren und eine Vorrichtung zur Herstellung eines nahtlosen Folienschlauches auf Cellulosebasis durch Extrudieren einer wäßrigen Cellulose-N-methyl-morpholin-N-oxid (NMMO)-Spinnlösung durch eine Ringdüse in ein Spinnbad, wobei die Spinnlösung zu dem Folienschlauch geformt wird, der in einer Luftstrecke zwischen der Ringdüse und dem Pegel des Spinnbades durch einen Stützluftüberdruck im Folienschlauch querverstreckt wird sowie einen nahtlosen Folienschlauch auf Cellulosebasis.

Die Herstellung von cellulosischen Formkörpern, insbesondere Fasern und Folien sowie Schlauchfolien nach dem Viskoseverfahren ist weithin bekannt, ebenso die damit verbundenen Probleme wie z. B. die hohe Anzahl an Prozeßstufen sowie kostenaufwendige Maßnahmen zur Abwasser- und Abluftbehandlung. Als Alternative zum Viskoseverfahren gilt die direkte Auflösung von Cellulose in einem organischen Lösungsmittel und die Verspinnung einer solchen Lösung in ein Fällbad.

Die Fähigkeit von tertiären Aminoxiden, unter bestimmten Bedingungen Cellulose aufzulösen, ist aus der US-A 2,179,181 bekannt. Die Herstellung von Lösungen aus dem tertiären Aminoxid N-Methyl-Morpholin-N-Oxid (NMMO) und Cellulose wird in der US-A 3,447,939 beschrieben. In der US-A 4,246,221 ist die Herstellung cellulosischer Formkörper durch Lösen von Cellulos e in einem Gemisch aus NMMO und Wasser und das Verspinnen derartiger Lösungen in ein wäßriges Fällbad offenbart werden. Ein Verfahren der vorgenannten Art wird im folgenden als "Aminoxidverfahren" bezeichnet.

Daneben ist in der WO 93/13670 die Herstellung einer nahtlosen schlauchförmigen Nahrungsmittelhülle durch Extrudieren einer Lösung von Cellulose in NMMO/$H_2O$ mit Hilfe einer speziellen Extrusionsdüse beschrieben. Zwischen Extrusionsdüse und Fällbad befindet sich eine Luftstrecke. Kennzeichnend für dieses Verfahren ist ein speziell geformter Hohldorn, durch den hindurch die Fällflüssigkeit auch im Inneren des Schlauches zirkulieren kann. In der Luftstrecke wird das Innere des extrudierten Schlauches praktisch vollständig von Hohldorn und Fällflüssigkeit ausgefüllt. Der Schlauch wird nicht querverstreckt.

In der WO 95/35340 ist ein Verfahren zur Herstellung von Celluloseblasfolien beschrieben, in dem eine in Aminoxiden gelöste, nicht derivatisierte Cellulose verwendet wird. Die Spinnlösung wird durch eine Ringdüse durch einen Luftspalt nach unten in ein Fällbad extrudiert, wobei in den Schlauch eine Flüssigkeit eingefüllt wird und auch im Inneren des Schlauches ein Luftspalt durch Variation der Innenbadsäule eingestellt wird. Der Schlauch wird durch ein Treibgas oder durch die im Schlauchinneren zwischen Innenbad und Düse eingeschlossene Luft aufgeblasen, wodurch eine gezielte Orientierung der Folie einstellbar ist und damit erhöhte Festigkeiten, vor allem in Querrichtung erhalten werden.

Als besonders nachteilig ist anzusehen, dass beim Extrudieren eines Folienschlauches aus einer Ringdüse in ein Spinnbad, wobei innerhalb des Spinnbades keine mechanische Abstützung des Folienschlauches vorgenommen wird, die Kalibergenauigkeit des mit einer Innenbadlösung gefüllten Folienschlauches nicht eingehalten werden kann und es zu unregelmäßigen Schwankungen des Schlauchdurchmessers kommt, die durch Druckschwankungen im zwischen Düse und Innenbadpegel eingeschlossenen inneren Luftspalt, resultiernd aus Schwankungen der Innenbadsäule aufgrund von Austauschvorgängen zwischen NMMO-haltigem Schlauch und Fällmedium, hervorgerufen werden. Weiterhin nachteilig ist es zu bewerten, dass im Verlauf des Spinnprozesses aufgrund der Austauschvorgänge zwischen NMMO-haltigem Schlauch und Fällmedium es zu einer Anreicherung von NMMO im inneren Fällbad kommt, so dass sich die Fällbedingungen kontinuierlich verändern und damit keine konstante Folienstruktur und damit keine konstanten Folieneigenschaften erhalten werden.

In der US-A 6 033 618 (EP-A 0 899 076) sind ein Verfahren und eine Vorrichtung beschrieben wonach ein nahtloser Folienschlauch auf Cellulosebasis aus einer Lösung von Cellulose in NMMO/$H_2O$ herstellbar ist, der die vorgenannten Nachteile nicht besitzt. Durch eine räumlich getrennte Zu- und Abführung von Fällbad in das Schlauchinnere wird ein konstanter Innenbadpegel und eine konstante Innenbadkonzentration eingestellt, so dass ein Folienschlauch mit konstantem Kaliber und konstanter Struktur herstellbar ist. Zur Erzielung besserer mechanischer Eigenschaften wird der Schlauch im Luftspalt durch geregelte Zufuhr von Druckluft in das Schlauchinnere querverstreckt, wobei stets ein konstanter Innendruck herrscht.

Die WO-A 9842492 offenbart eine Vorrichtung zur Herstellung cellulosischer Schlauchfolien durch Extrusion einer Lösung von Cellulose in einem wässrigen tertiären Aminoxid in ein unterhalb der Vorrichtung befindliches Fällungsmittel. Der durch Extrudieren einer wässrigen Cellulose-NMMO-Spinnlösung hergestellte nahtlose Folienschlauch wird durch Gasdruck oder durch hydrostatischen Druck quer zur Transportrichtung verstreckt.

Aus der WO-A 0023250 sind ein Verfahren und eine Vorrichtung zur Regelung des Durchmessers eines Folienschlauchs auf Cellulosebasis bekannt. Hierzu wird eine Cellulose-NMMO-Spinnlösung in eine Extrusionsdüse injiziert, um einen Cellulose-Folienschlauch in einem Spinnbad zu erhalten. Die Vorrichtung enthält ein vertikal verschiebbares Tauchrohr, das ein Absaugrohr und ein Zulaufrohr umschließt. Die Absaugöffnung des Absaugrohrs taucht sowohl während der Extrusion als auch zu Startbeginn jeweils in eine Innenbadflüssigkeit im Tauchrohr ein, d. h. befindet sich nicht auf gleicher Höhe wie der Pegel der Innenbadflüssigkeit im Rohr.

Die DE-A 196 07 953 beschreibt die Herstellung und Verwendung von nahtlosen Folienschläuchen auf Cellulosebasis als Wursthüllen, die durch Extrusion einer Spinnlösung aus Cellulose, NMMO und Wasser durch eine Ringdüse und einen Luftspalt in ein Fällbad hergestellt werden.

Verfahren zur Herstellung von Spinnlösungen aus Cellulose, NMMO und $H_2O$ sind allgemein bekannt. Nach dem Stand der Technik wird beim Aminoxidverfahren aus einer Suspension aus Zellstoff und wässrigem NMMO, welches in der dabei angewendeten Konzentration und bei der angewendeten Temperatur ein Nichtlösungsmittel für die Cellulose darstellt, unter erhöhter Temperatur und Scherung durch Entfernen von Wasser unter Vakuum bis zu einer NMMO-Konzentration, die im wesentlichen der Monohydrat-Konzentration des NMMO entspricht, durch Auflösen der Cellulose eine spinnfähige Lösung erhalten. Die Spinnlösung kann dabei einen Cellulose-Anteil zwischen 5 und 20 Gew.-%, bevorzugt zwischen 7 und 15 Gew.-%, bezogen auf das Gesamtgewicht der Spinnlösung, enthalten. Weitere natürlich vorkommende und/oder hydrophile synthetische Polymere sowie Polymere, die sowohl hydrophile als auch hydrophobe Eigenschaften besitzen, können in der Spinnlösung enthalten sein. (DE-A 196 07 953).

Für den Einsatz solcher cellulosischen Folienschläuche als Wursthüllen ist es erforderlich, dass neben einer exakten Kaliberkonstanz sich die Wursthüllen nach der Verwendung wieder leicht abschälen lassen, ohne den Inhalt, d. h. die Wurst, zu beschädigen. Die Kaliberkonstanz, d. h. gleichmäßiger Umfang und keine Knicke, Falten o. ä., sind Voraussetzung für ein problemloses Raffen der Hüllen sowie anschließend für die Gleichmäßigkeit der Würste in Bezug auf Umfang und Oberflächenbeschaffenheit. Das Schälverhalten der Wursthüllen kann durch spezielle Imprägnierungen der Innenseite verbessert werden. Diese sogenannte "easy- peel"-Innenpräparation kann sowohl beim Trocknen als auch während des Raffens über einen Innen-Raffdorn appliziert werden. diese Verfahren sind schon vielfach beschrieben, z. B. in der US-A 3,898,348, EP-A 0 180 207, EP-A 0 635 213, US-A 5,358,784. Eine Verbesserung des Schälverhaltens ohne oder unter Einsatz geringerer Mengen an "easy-peel-Präparation" (und damit verbunden geringere Produktionskosten) ist aber auch erzielbar durch eine möglichst gleichmäßige und ebene innere Oberflächenstruktur. Als Maß für die "Glätte" der inneren Oberfläche des Folienschlauches kann die Rauhigkeit dienen, die mittels einer Perthometers bestimmt werden kann.

Das Perthometer ist ein elektrisches Messgerät für Profilaufzeichnungen, Messwertanzeige und Protokollierung von Messungen an technischen Oberflächen. Ein Messtaster fühlt mit seiner vertikalbeweglichen Tasterspitze die Gestalt der Oberfläche längs der Taststrecke ab. Bewegungen der Tasterspitze werden auf einen elektrischen Messwertwandler übertragen, der diese in elektrische Messwerte umwandelt, die das ertastete Profil darstellen. Gemäß der DIN-Norm 4766 können verschiedene Rauheitskenngrößen $R_a$, $R_z$, $R_{max}$ ermittelt werden. Der arithmetische Mittenrauwert $R_a$ ist der arithmetische Mittelwert der absoluten Werte der Profilabweichungen innerhalb einer Bezugstrecke l. Er ist gleichbedeutend mit der Höhe eines Rechtecks, dessen Länge gleich der Bezugstrecke l ist und das flächengleich mit der Summe der zwischen Rauheitsprofil und mittlerer Linie eingeschlossenen Fläche ist. Üblicherweise wird der $R_a$-Wert innerhalb einer gesamten Strecke $l_m$ ermittelt, die aus fünf aneinander gereihten Einzelmessstrecken $l_e$ besteht. Die gemittelte Rautiefe $R_z$ ist das arithmetische Mittel aus den Einzelrautiefen fünf aneinander grenzender Einzelmessstrecken. Die maximale Rautiefe Rmax ist die Größe der auf der Gesamtmessstrecke $l_m$ vorkommenden Einzelrautiefen.

Aus der EP-A 0 807 460 und der DE-A 197 50 527 ist es bekannt, dass Spinnlösungen aus Cellulose und/oder modifizierter Cellulose, einem tertiären Aminoxid sowie weiteren Flüssigkeiten und Zusätzen wie Stabilisatioren, Porenbildner und dgl. zu cellulosischen Trennmembranen in Form von Flach-, Schlauch- oder Hohlfasermembranen versponnen werden können. Dabei wird die Struktur und damit die Trennfähigkeit der Membran in weiten Grenzen über das Fällmedium und/oder über die Zusammensetzung des Fällmediums, über die Fällbadtemperatur sowie die Konzentration des cellulosischen Polymers in der Spinnlösung beeinflußt. Gleichlautende Aussagen zur Strukturbeeinflussung an Blasfolien nach dem Aminoxidverfahren sind auch in "Das Papier" 12/97, Seiten 643 bis 652 veröffentlicht worden.

Aufgabe der vorliegenden Erfindung ist es, ein Verfahren der eingangs beschriebenen Art so zu verbessern, dass ein nahtloser cellulosischer Folienschlauch mit konstantem Kaliber und ohne Defekte durch Falten sowie mit gleichbleibend niedriger Oberflächenrauigkeit der Innenseite des Folienschlauches erhalten wird.

Erfindungsgemäß wird diese Aufgabe durch das Verfahren des Anspruch 1 gelöst.

In Ausgestaltung des Verfahrens werden als modifizierende Verbindungen synthetische Polymere und Copolymere aus Acrylsäureestern mit Acrylsäure, Methacrylsäureestern mit Methacrylsäure, Maleinsäureestern mit Maleinsäure sowie Acryl-methacrylamid, Vinylalkohol ausgewählt. Des weiteren werden die modifizierenden Verbindungen aus der Gruppe Citronen-, Ascorbinsäure, Maltodextrine, Sorbit, Manose, Glucose, Phosphonatsalze, anorganische Salze, Gallussäureester ausgewählt.

In Ausgestaltung des Verfahrens wird für das Spinnbad und das Innenfällbad jeweils die gleiche wässrige NMMO-Lösung mit 5 bis 50 Gew.-%, insbesondere 15 bis 35 Gew.-% NMMO-Anteil verwendet.

In Ausgestaltung des Verfahrens wird der Verzug des Folienschlauches, gegeben durch den Quotienten Ausströmgeschwindigkeit der Spinnlösung aus der Spinndüse zur Abzugsgeschwindigkeit des Folienschlauches, so gewählt, dass die Querverstreckung des Schlauchdurchmessers bis zu 30 % beträgt, bezogen auf den unverstreckten Durchmesser unmittelbar nach dem Schlauchaustritt aus der Spinndüse.

Die weitere Ausgestaltung des Verfahrens ergibt sich aus den Merkmalen der Ansprüche 7 bis 14.

Gemäß dem Anspruch 15 zeichnet ein nahtloser Folienschlauch auf Cellulosebasis herstellbar durch Extrudieren einer wässrigen Cellulose-NMMO-Spinnlösung sich dadurch aus, dass der Folienschlauch eine maximale Rauigkeit $R_{max}$ größer 0,1 bis 0,5 µm und eine mittlere Rauigkeit $R_m$ von 0,005 bis 0,014 µm hat und mit Glycerin plastifiziert ist.

In Ausgestaltung des nahtlosen Folienschlauches weist die Cellulose einen Durchschnittspolymerisationsgrad DP von 300 bis 700, bevorzugt von 400 bis 650 auf. In weiterer Ausgestaltung des Folienschlauches bildet sich an der Oberfläche des Folienschlauches im Kontakt mit einem Elektrolyten eine elektrische Ladungsdichte aus, der ein elektrokinetisches Potential, das Zeta-Potential, entspricht, das im pH-Bereich von 6 bis 10,5 des Elektrolyten im Bereich von -15 bis -25 mV und im pH-Bereich von 3,5 bis 5,5 des Elektrolyten im Bereich von +5 bis -15 mV liegt.

Die weitere Ausgestaltung ergibt sich aus den Merkmalen der Patentansprüche 18 bis 20.

Die Vorrichtung zur Herstellung des nahtlosen Folienschlauches auf Cellulosebasis durch Extrudieren einer wässrigen Cellulose-N-methyl-morpholin-N-oxid (NMMO)-Spinnlösung, die eine Ringdüse, ein Spinnbad, eine Luftstrecke zwischen der Ringdüse und der Oberfläche des Spinnbades und nahe dem Boden einer Spinnkufe eine Umlenkung für den Folienschlauch aufweist, zeichnet sich dadurch aus, dass ein Absaugrohr für ein Innenfällbad im Rohr höhenverstellbar angeordnet ist, dass das Rohr einen kleineren Durchmesser als die Ringdüse hat, dass das untere Rohrende sich oberhalb des Innenfällbades befindet, dass im Folienschlauch innerhalb der Luftstrecke, die 30 bis 100 mm lang ist, Stützluftüberdruck vorhanden ist, dass das Innenfällbad im Rohr höher steht als im Folienschlauch und dass mehrere Waschkufen und eine Weichmacherkufe, die eine Glycerinlösung enthält, vorhanden sind, durch die der Folienschlauch hindurchführbar ist.

In Weiterbildung der Vorrichtung ist durch das Rohr ein Zulaufrohr hindurchgeführt, durchsetzt das Rohr eine Pinole der Ringdüse zentral und bildet einen Spalt mit einem zentralen Durchgang der Pinole und ist das Zulaufrohr höhenverstellbar.

Eine Ausgestaltung der Vorrichtung zeichnet sich dadurch aus, dass ein Pegel des Innenfällbades im Rohr höher als der Pegel des Innenfällbades im Folienschlauch steht und dass der Pegel des Innenfällbades in der Luftstrecke zwischen der Ringdüse und dem Pegel des Spinnbades sich befindet.

Die Erfindung wird im folgenden anhand eines zeichnerisch dargestellten Ausführungsbeispiels näher erläutert.

Es zeigen:

Fig. 1 eine schematische Schnittansicht der Vorrichtung nach der Erfindung mit im Luftspalt justiertem Rohr und Absaugrohr im Folienschlauch, sowie mit hochgestelltem Zulaufrohr

Fig. 2 eine schematische Schnittansicht der Vorrichtung ähnlich derjenigen nach Fig. 1, mit in den Folienschlauch eingeschobenem Zulaufrohr

Fig. 3 eine vergrößerte Schnittansicht der Stelle A in Fig. 1.

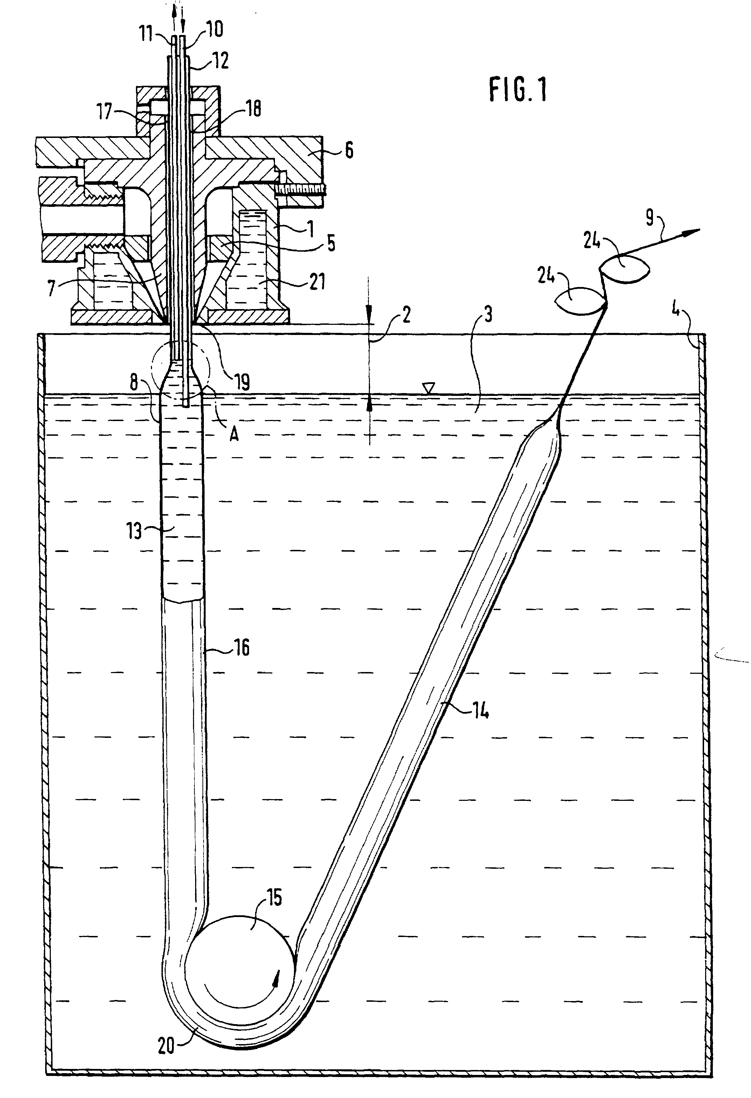

Eine in Fig. 1 gezeigte Vorrichtung zum Extrudieren einer wässrigen Cellulose-(NMMO)-Lösung zu einem Folienschlauch umfaßt eine Ringdüse 1 und eine Spinnkufe 4, die mit einem Spinn- oder Fällbad 3 gefüllt ist. Das Spinnbad 3 besteht aus einer wässrigen NMMO-Lösung mit 5 bis 50 Gew.-%, insbesondere 15 bis 35 Gew.-%igen NMMO-Anteil. Die an sich bekannte Ringdüse 1 umfaßt als wesentliche Bestandteile eine Vorverteilerscheibe 5, eine Verstelleinrichtung 6, eine Pinole 7 mit einem zentralen Durchgang 18 und einen Extrusionsdüsenspalt 19. Die zu einem Folienschlauch zu extrudierende wässrige Spinnlösung ist eine NMMO-Lösung mit 50 bis 95 Gew.-%, insbesondere 70 bis 80 Gew.-% NMMO-Anteil und 5 bis 15 Gew.-%, bevorzugt 7 bis 12 Gew.-% Cellulose-Anteil. Der Durchschnittspolymerisationsgrad der Cellulose beträgt dabei bevorzugt 300 bis 700, besonders bevorzugt 400 bis 650. Die Spinnlösung wird mittels einer nichtgezeigten Spinnpumpe einseitig in die Ringdüse 1 eingebracht. Die Vorverteilerscheibe in der Ringdüse 1 sorgt für eine über dem Umfang weitgehend gleichmäßige Zuführung der Spinnlösung in den Extrusionsdüsenspalt 19. Der Durchmesser des Extrusionsdüsenspaltes 19, bei dem es sich um einen Ringspalt handelt, ist größer als der Außendurchmesser des Rohres 12. Der Extrusionsdüsenspalt ist allgemein 0,1 bis 3 mm, bevorzugt 0,2 bis 1,5 mm breit. Die Feineinstellung der Folienschlauchdicke erfolgt über die Verstelleinrichtung 6 der Pinole 7. Die Ringdüse 1 besitzt einen Doppelmantel zur Erwärmung der Ringdüse 1 auf die Temperatur der Spinnlösung, wobei für die Erwärmung ein Heizmedium 21 vorgesehen ist, das den Doppelmantel durchströmt. Die Temperatur kann 75 bis 120 °C betragen. Der Verzug des Folienschlauches in Längsrichtung in einer Luftstrecke 2 erfolgt in der Weise, dass die Abzgusgeschwindigkeit des Folienschlauches größer als die Ausströmgeschwindigkeit der Spinnlösung gewählt wird. Der Quotient aus Abzugs- und Ausströmgeschwindigkeit ergibt die Längsverstreckung. Der aus dem Düsenspalt 19 extrudierte Folienschlauch durchläuft diese äußere Luftstrecke 2 zwischen Düsenaustrittund Spinnbadoberfläche, in der er längs- und querverstreckt wird. Die Querverstreckung geschieht in erster Linie durch den im Schlauchinneren anstehenden Stützluftdruck, der höher als der äußere Atmosphärendruck ist und/ oder in zweiter Linie durch den hydrostatischen Druck des Innenbades, das das Außenbadniveau, d.h. einen Pegel 22 überragt. Durch diese Verstreckung in Querrichtung erhöht sich die Querfestigkeit des Schlauches erheblich. Die Querverstreckung des Schlauchdurchmessers beträgt je nach Größe des Stützluftdrucks und/ oder hydrostatischen Drucks 0 bis 30 % gegenüber dem Durchmesser des unverstreckten Schlauches unmittelbar nach Verlassen des Düsenspaltes 19. Der aufgeweitete Folienschlauch 8 hat keinen Kontakt mit der Außenseite eines Rohrs 12, das durch den Durchgang 18 der Pinole 7 hindurchgeführt ist und sich über die Unterseite der Ringdüse 1 hinaus nach unten erstreckt. Das untere Ende des Rohres 12 befindet sich oberhalb des Innenfällbades. Die Luftstrecke 2 beträgt 10 bis 100 mm. Das Rohr 12 umschließt ein Zulauf- und ein Absaugrohr 10 bzw. 11 für das Innenfällbad 13, das in den Folienschlauch eingefüllt ist. Dieses Innenfällbad 13 besteht gleichfalls aus einer wässrige NMMO-Lösung mit 5 bis 50 Gew.-%, insbesondere 15 bis 35 Gew.-%-igenNMMO-Anteil und kann noch weitere wasserlösliche strukturbeeinflussende Polymere in einem Anteil von 1 bis 100 Gew.-%, bezogen auf die Menge an NMMO, enthalten.

Diese Polymere sind beispielsweise synthetische Homo- und/oder Copolymere aus Acrylsäureestern, Methacrylsäureestern und/oder Maleinsäureestern mit Acrylsäure, Methacrylsäure und/oder Maleinsäure. Des weiteren können Acrylamid, Methacrylamid und/oder Vinylalkohol enthalten sein. Des weiteren können eine oder mehrere organische niedermolekulare Verbindungen aus der Gruppe der Fettsäuren, Fettsäureester oder Fettamine und Fettalkohol enthalten sein. Weitere Additive sind ein- oder mehrere Verbindungen aus der Gruppe Gallussäureester, Phosphonatsalze, Citronensäure, Ascorbinsäure, Manose, Sorbit, Maltodextrin, Glycerin, Ethylenglykol, und dgl. oder anorganische Salze. Zur Verbesserung der Geschmeidigkeit der Folienschläuche werden der Spinnlösung modifizierende Verbindungen zugesetzt. Diese Verbindungen müssen mit der wässrigen Cellulose-NMMO-Spinnlösung mischbar sein. Der Anteil dieser Verbindungen beträgt im allgemeinen 0,2 bis 50 Gew.-%, und bevorzugt 0,5 bis 20 Gew.-%, jeweils bezogen auf das Gewicht der Cellulose. Insbesondere kann der Anteil auch 1 bis 15 Gew. -% dieser modifizierenden Verbindungen sein. Diese Verbindungen lassen sich bei einer Temperatur von 85 bis 105 °C, vorzugsweise von 90 bis 100 °C mit der Spinnlösung homogen vermischen. Besonders geeignete, die innere Struktur des Folienschlauches modifizierende Verbindungen sind Stärke, Cellulose, Stärke- und Cellulosederivate, wie Ester oder Ether der Stärke oder der Cellulose, ferner Zuckerester, und des weiteren hydrophile, in der Natur vorkommende Polymere wie Alginsäure, Alginate, Chitosan und Carrageenan. Ein bevorzugtes hydrophiles synthetisches Polymere ist Vinylalkohol. Ebenso könnenPolyvinylpyrrolidon, Copolymere aus Vinylpyrrolidon und (2-)Dimethylamino-ethyl-methacrylat, Copolymere aus Methylvinylether und Maleinsäureanhydrid oder aus Methylvinylether und Maleinsäuremonoalkylester eingesetzt werden.

Bei den oberflächenverändernden Zusätzen zur Spinnlösung ist zu beachten, dass diese bei der Lösungsherstellung einer thermischen Belastung bei einer Temperatur von 85 bis 100 °C ausgesetzt sind. Sie müssen daher thermisch beständig sein und dürfen beim Abdestillieren des überschüssigen Wassers nicht mit übergehen. Besonders geeignete Zusätze sind Bienenwachs, Carboxymethylstärke, Cellulsoecarbamat, Gelatine, Xanthan, Carboxymethylcellulose, Glycerin-monolaurat, Na-Caseinat, Celluloseacetat.

D es weiteren sind ethoxylierte Fettsäuren oder deren S alze wie Stearins äure oder Calciumstearat, Wachse und Paraffine geeignet.

Die oberflächenverändernden Additive sind allgemein organische Polymere. Es können in der Natur vorkommende Polymere, Derivate von solchen natürlichen Polymeren oder synthetische Polymere sein. Besonders geeignet sind Proteine (wie Gelatine, Casein, Weizenprotein, Sojaprotein), Proteinderivate (beispielsweise eine durch Umsetzung mit Stearoylchlorid derivatisierte Gelatine oder Natrium- oder Kaliumcaseinat), Derivate von Mono-, Di- oder Oligosacchariden, insbesondere Ester aus Zucker und Fettsäuren (wie Ester aus Saccharose und geradkettigen, gesättigten oder ungesättigten $(C_{12}\text{-}C_{24})$Fettsäuren), Mono-, Di-und Triglyceride (wie Glycerin-monolaurat, das zusätzlich auch noch fungicide Eigenschaften hat), Diketene mit allgemein geradkettigen, gesättigten $(C_{14}\text{-}C_{20})$Alkylresten (erhältlich beispielsweise unter der Bezeichnung ®Aquapel), Wachse (wie Bienenwachs, Montanwachs oder Carnaubawachs) und/oder Paraffine. Es können auch mehrere der genannten Additive gleichzeitig eingesetzt werden. Proteine und Polyamide bewirken insbesondere eine Verbesserung der Bräthaftung.

Die modifiziertenden Verbindungen können auch vernetzbar sein, wie es bei Polyethyleniminen der Fall ist. Ganz allgemein erhöhen diese Verbindungen die Geschmeidigkeit, Zähigkeit, Clipund Scherstabilität der Folienschläuche. Sie wirken im übrigen auch als innere bzw. primäre Weichmacher. Bei ihrer Anwendung kann u. U. auf eine Imprägnierung mit sekundären Weichmachern wie Glycerin ganz verzichtet werden, wenn der Anteil der modifizierenden Verbindungen groß genug, d.h. im allgemeinen in der Größenordnung von 8 Gew.-% oder mehr, bezogen auf das Gewicht der trockenen Cellulose, beträgt. Derartige modifiziertende Verbindungen vermindern auch im allgemeinen die Kristallisationsneigung der Cellulose.

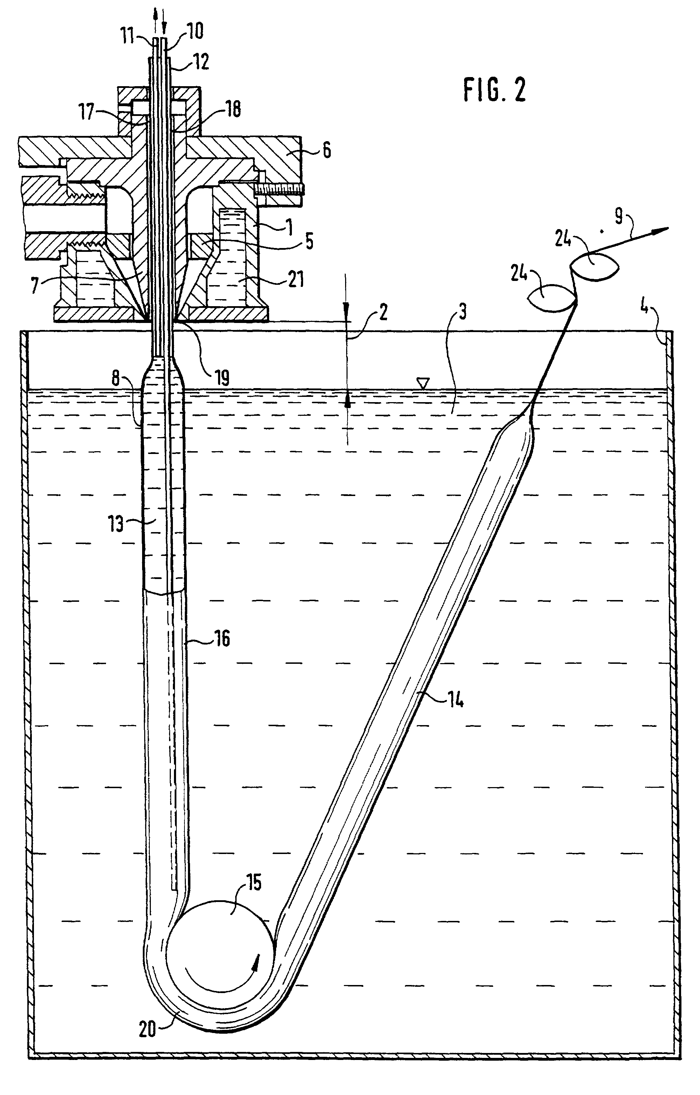

Das Zulauf- und das Absaugrohr 10 bzw. 11 ragen in den senkrecht nach unten in das Spinnbad 3 eintauchenden Folienschlauch 16 hinein. Zu Beginn des Einfüllens des Innenfällbades 13 in den Folienschlauch 16 nimmt das Zulaufrohr 10 eine obere Position ein, wie dies in Fig. 1 gezeigt ist. Das Absaugrohr 11 wird in einer Position oberhalb des Spinnbades 3 festgestellt, Dadurch wird gewährleistet, dass die Innenbadoberfläche 23 über den Pegel des Spinnbades 3 gehalten wird. Da der Folienschlauch 16 im aufgeweiteten Zustand das Spinnbad durchläuft, wird die durch die Querverstreckung erzielte höhere Querorientierung fixiert. Der Folienschlauch 16 passiert in aufgeweitetem Zustand die Umlenkung 15, so dass die Gefahr der Bildung von Knicken und Falten an der Umlenkung gegen Null geht. Sobald der Folienschlauch mit der Innenbadlösung gefüllt ist, wird das Zulaufrohr 10 in eine Position in den Folienschlauch 16 eingeschoben, die sich knapp oberhalb der Umlenkung 15 für den Folienschlauch 16 befindet, wie in Fig. 2 gezeigt. Das Zulaufrohr 10 ist ebenso wie das Absaugrohr 11 innerhalb des senkrecht eintauchenden Folienschlauches 16 höhenverstellbar. Das Rohr 12 bildet einen Spalt 17 mit der Wand des Durchgangs 18 und über diesen Spalt 17 erfolgt der Druckausgleich der Luft in dem inneren Luftspalt 17 zwischen dem Rohr 12 und dem Folienschlauch 16 mit der Umgebung.

Der wie beschrieben querverstreckte und aufgeweitete Folienschlauch 16 wird nach der Umlenkung 15, bei der es sich um einen Porzellan- oder Glasstab handelt, innerhalb des Spinnbades 3 unter einem Winkel von 10 bis 80 ° zur Horizontalen nach oben aus dem Spinnbad herausgeführt. Der nach oben laufende Folienschlauch 14 wird knapp unterhalb der Oberfläche des Spinnbades durch den Innendruck des Spinnbades zusammengequetscht und im zusammengefalteten Zustand aus dem Spinnbad 3 hinausgeführt. Abstreifer 24 zu beiden Seiten des zusammengefalteten Folienschlauches 14 streifen die überschüssige Spinnbadlösung beidseitig ab und die Breite des flachgelegten Folienschlauches 9 nach den Abstreifern nahe dem Ausgang aus der Spinnkufe 4 wird als Regelgröße für die Höhe der Innenbadsäule verwendet. Jede Abweichung der Breite des flachgelegten Folienschlauches 9 von einem vorgegebenen Wert bewirkt eine Nachregelung der Höhe der Innenbadsäule in der Weise, daß bei einer Abweichung nach unten der Innenbadpegel 23 angehoben und bei einer Abweichung nach oben der Innenbadpegel 23 abgesenkt wird.

Fig. 2 stellt die Stellung des Zulaufrohres nach dem Anspinnen dar. Dieses ist dann mit einer Öffnung im Vergleich mit Fig. 1 knapp oberhalb der Umlenkung 15 angeordnet. Das Spinnbad 3 und das Innenfällbad 13 bestehen aus wässrigen NMMO-Lösungen. Daneben kann das Innenfällbad noch weitere strukturbeeinflussende wasserlösliche Polymere enthalten, um eine möglichst glatte Innenoberfläche des Folienschlauches 16 zu erhalten. Im Verlauf des Spinnprozesses wird zunächst die Konzentration an NMMO in der Innenbadlösung ansteigen, da das NMMO aus dem Folienschlauch 16 ausdiffundiert und sich im Innenfällbad anreichert. Da das NMMO eine höhere Dichte als $H_2O$ besitzt, steigt die NMMO-Konzentration bzw. die Dichte der Innenbadlösung in Richtung der Umlenkung 15 innerhalb des Folienschlauchs 16 an. Da sich andererseits die NMMO-Konzentration des Spinnbades 3 praktisch nicht ändert, da die von dem Folienschlauch an das Spinnbad abgegebene NMMO-Menge wegen des großen Volumenunterschiedes zwischen Folienschlauch und Spinnbad vernachlässigbar geringfügig ist, anders als bei der Innenbadlösung im Folienschlauch 16, käme es ohne Regelung der NMMO-Konzentration der Innenbadlösung zu einer übermäßigen Ausdehnung des Folienschlauches 16. Durch die ständige Zufuhr und das Absaugen der Innenbadlösung über das Zufuhr- und das Absaugrohr 11 kommt es zu einer stetigen Erneuerung der Innenbadlösung und Einstellung der gewünschten NMMO-Konzentration, so dass die NMMO-Konzentration des Innenfällbades 13 weitestgehend konstant auf den erforderlichen Wert eingestellt werden kann. Die erforderliche NMMO-Konzentration des Innenfällbades 13 hängt ab von der gewünschten Oberflächenstruktur im Schlauchinneren. ZurBeeinflussung der Oberflächenstruktur der Schlauchinnenseite, um eine möglichst glatte Oberfläche zu erhalten, wird der Fachmann vordringlich versuchen, über die NMMO-Konzentration und die Temperatur zum Ziel zu kommen. aber auch den Zusatz von strukturbeeinflussenden wasserlöslichen Polymeren wird er in Betracht ziehen.

Die Höhe der Innenbadsäule wird abhängig vom Spinnverzug eingestellt. Der Fachmann wird die Querverstreckung des Folienschlauches im Luftspalt 2 an die Verstreckung des Folienschlauches in Längsrichtung durch den Verzug im Luftspalt 2 anpassen, um ein möglichst ausbalanciertes Festigkeitsniveau des Folienschlauches in Längs- und Querrichtung zu erhalten. In Abhängigkeit der Dichte des Innenfällbades und der Höhe der Innenbadsäule wird der Fachmann die Dichte des Spinnbades 3 über die NMMO-Konzentration so einstellen, dass es nicht zu den oben angeführten negativen Erscheinungen der zu starken Ausweitung kommt. Dies wird erreicht, indem der im Luftspalt 2 verstreckte Folienschlauch 16 mit konstantem Durchmesser das Spinnbad 3 bis zur Umlenkung durchläuft, wobei die erreichte Querverstreckung im Luftspalt fixiert wird und keine Kaliberschwankungen auftreten. Daneben wird durch diese Verfahrensweise gewährleistet, dass der Folienschlauch 16 an der Umlenkung 15 im aufgeweiteten Zustand umgelenkt wird und damit die Gefahr der Bildung von Knicken oder Falten deutlich minimiert bzw. weitgehend ausgeschlossen wird, wodurch die Qualität des Folienschlauches deutlich zunimmt.

Die Folienschläuche werden auf der Innenund/oder Außenseite mit einer Imprägnierung oder Beschichtung 10, beispielsweise einer easy-peel-Innenpräparation, einer Flüssigrauchimprägnierung oder einer sonstigen Präparation zur Erhöhung der Stabilität der Raupen ausgerüstet, die aus den Folienschläuchen durch Raffen erzeugtwerden. Die Imprägnierung der Folienschläuche auf der Innenseite erfolgt zweckmäßigerweise vor dem Trocknungsvorgang oder während des Raffens über den Raffdorn. Die Cellulose der Folienschläuche weist einen Durchschnittspolymerisationsgrad DP von 300 bis 700 und insbesondere von 400 bis 650 auf.

Geeignete easy-peel-Präparationen, die auf einen mit Glycerin plastifizierten Folienschlauch auf der Innenseite aufgetragen werden, bestehen aus 1 bis 2 Gew.-% Carboxymethylcellulose, 0,5 bis 1,5 Gew.-% Sorbitan-trioleat bezogen auf Carboxymethylcellulose, 0,5 bis 1 Gew.-% eines Gemisches aus Mono- und Diglyceriden und dem Rest Wasser. Diese easy-peel Präparationen werden beispielsweise durch ein sogenanntes "bubble coating" -Verfahren aufgetragen oder beim Raffen eingesprüht. Durch diese Imprägnierung wird der spätere Schälprozeß erleichtert. Anstelle einer easy-peel-Präparation kann auch eine Flüssigrauchpräparation vorgesehen werden, die aus 35 bis 39 Gew.-% Flüssigrauch, 1 bis 10 Gew.-% Lecithin, einer oder mehreren Komponenten aus der Gruppe NaOH mit 3 bis 5 Gew.-%, Aliginat mit 1,5 bis 2 Gew.-%, PolyethylenglykolMonoalkylether (Genapol ®) mit 2 bis 3 Gew.-% und Chromfettsäure-Komplex (Montacell ®) mit $C_{14}$-$C_{18}$-Alkylresten mit 1 bis 2 Gew.-% und dem Rest Wasser besteht. Diese wässrige Flüssigrauchpräparation wird auf die Innenseite des Folienschlauches aufgesprüht. Die Imprägierung bewirkt eine Ausrüstung mit einem Räucheraroma und gleichzeitig einen easypeel-Effekt, der eine leichte Schälbarkeit des Folienschlauches der Wursthülle gewährleistet.

Die nach dem NMMO-Verfahren erhaltenen Folienschläuche weisen eine wesentlich höhere Dichte und größere Glätte bzw. geringere Rauigkeit der Oberfläche im Vergleich zu Folienschläuchen, die nach dem Viskose-Verfahren hergestellt sind, auf. Das führt zu einer höheren Festigkeit der Folienschläuche oder ermöglicht es, bei gleichbleibender Festigkeit die Wandstärke der Folienschläuche im Vergleich mit Folienschläuchen, hergestellt nach dem Viskose-Verfahren, zu verringern. Die glatte innere Oberfläche führt schließlich auch dazu, dass sich die Folienschläuche leichter abschälen lassen. Dabei können derartige Glätten der Folienschläuchen erreicht werden, dass die üblicherweise auf der Innenseite der Folienschläuche aufgebrachten Präparationen, wie easy-peel-Präparationen, vermindert werden können oder sogar ganz weggelassen werden können. Rückschlüsse über die Beschaffenheit und die Eigenschaften der Oberfläche der Folienschläuche liefert das elektrokinetische Potential, das sogenannte Zeta-Potential der Folienschläuche. Diese Größe beschreibt die Ladungsverhältnisse an der Grenzfläche zwischen den Folienschläuchen und einem vorbeiströmenden Elektrolyten, insbesondere wie dessen pH-Wert auf die Oberfläche einwirkt. Es kommt zu einer elektrischen Aufladung der Folienoberfläche, die durch Dissoziation funktioneller Gruppen von Polymeren an der Oberfläche der Folien oder durch spezifische Adsorption von Ionen aus Elektrolytlösungen hervorgerufen wird. Die daraus resultierende Polarität des Polymermaterials der Hülle bzw. des Folienschlauches ist für die Ausbildung einer elektrischen Doppelschicht verantwortlich. Das Potential dieser elektrischen Doppelschicht kann nicht direkt gemessen werden, statt dessen wird das Zeta-Potential bestimmt und zur Charakterisierung der elektrischen Eigenschaften herangezogen. Das Zeta-Potential baut sich auf, sobald sich die dissoziationsfähigen Gruppen aufweisende Oberfläche der Folie bzw. des Folienschlauches und eine Eleklrolytlösung tangential zueinander bewegen. Das Zeta-Potential entspricht derNettoladungsdichte der Folienoberfläche. Die Helmholtz-Smoluchowski-Gleichung zur Beschreibung des Zeta-Potentials lautet:

$$\zeta = \frac{4\pi\eta\kappa E_s}{\varepsilon_0 \ D \ \Delta P}$$

worin

$\zeta$      das Zeta-Potential [V],
Es      das Strömungspotential [V],
$\kappa$      die spezifische Leitfähigkeit [$\Omega^{-1}\cdot$cm$^{-1}$],
$\eta$      die dynamische Viskosität [Pa · s],
$\varepsilon_0$      die Influenzkonstante [C · V$^{-1}$ · cm$^{-1}$],
$\Delta P$      die Druckdifferenz [Pa] und
D      die Dielektrizitätskonstante

bedeuten.

Bei den nach dem NMMO-Verfahren hergestellten Folienschläuchen liegt das Zeta-Potential im pH-Bereich des Elektrolyten von 6 bis 10,5 bei etwa -15 bis -25 mV und im pH-Bereich von 3,5 bis 5,5 des Elektrolyten im Bereich von +5 bis -15 mV. Untersuchungen der Oberflächenbeschaffenheit mit Hilfe eines Raster-Kraftfeld-Mikroskops zeigten eine weitgehend glatte Oberfläche der nach dem NMMO-Verfahren herstellten Folienschläuche aus regenerierter Cellulose. Es sind nur vereinzelt Erhebungen sichtbar, wobei der Abstand zwischen dem höchsten und tiefsten Punkt der Oberfläche, d. h. $R_{max}$ mehr als 0,1 μm beträgt und in Einzelfällen bis zu 0,5 μm betragen kann. Die mittlere Rauigkeit $R_m$ liegt im Bereich von 0,005 bis 0,014 μm. Bei einer derartig glatten Oberfläche der Folienschläuche kann eine easy-peel-Präparation bzw. eine Flüssigrauchpräparation stark reduziert bzw. sogar weggelassen werden, wobei beim Weglassen der easy-peel Präparation der mit Glycerin plastifizierte Folienschlauch eine Restfeuchte von 8 bis 12 Gew.-% nach dem Trocknen besitzt.

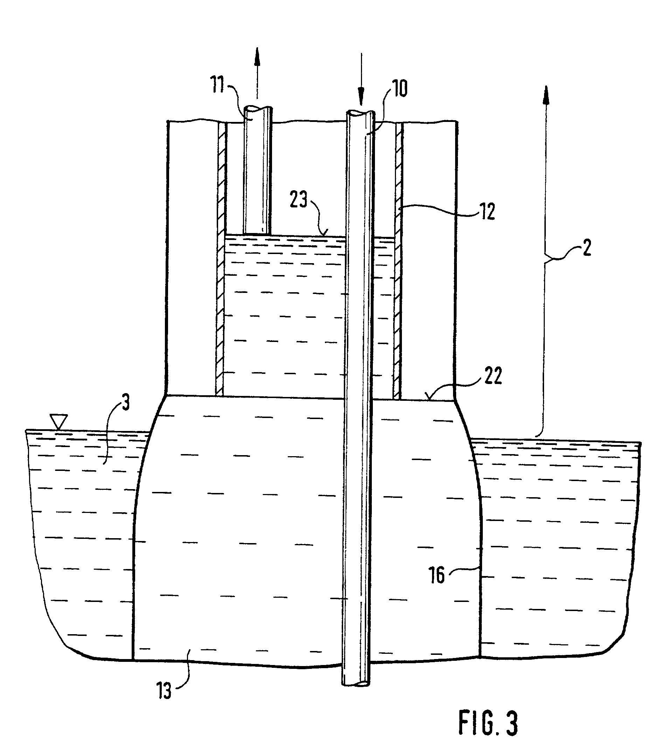

Fig. 3 zeigt den Ausschnitt gemäß der Stelle A in Fig. 1 in vergrößertem Maßstab. Das Rohr 12 befindet sich etwa 3 bis 10 mm unterhalb der Extrusionsdüse 1 im inneren Luftspalt 17. Das Absaugrohr 11 befindet sich in einer Position, in der sich ein Pegel 23 im Rohr 12 oberhalb der Oberfläche des Spinnbads 3 und oberhalb des Pegels 22 des Innenfällbades 13 im Folienschlauch 16 einstellt. Die Absaugung beginnt also oberhalb der Oberfläche des Spinnbades 3.

Durch die Einstellung der Eintauchtiefe des Zufuhrrohrs 10 und die stetige Erneuerung der Innenbadlösung auf eine gleichbleibende Konzentration und damit Dichte wird gewährleistet, dass bei angepaßter Konzentration bzw. Dichte des Spinnbades 3 der Folienschlauch 16 mit konstantem verstrecktem Durchmesser bis zur Umlenkung 15 läuft und es nicht zu unruhigen Lauf- und Kaliberschwankungen kommt. Die Höhe der Innenbadsäule und die stetige Erneuerung bzw. Mindestzufuhr an Innenbadlösung ist für jede Extrusions- bzw. Abzugsgeschwindigkeit des Folienschlauchs 16 eigens zu ermitteln.

Der aus dem Spinnbad 3 austretende Folienschlauch 16 durchläuft nachfolgend nicht gezeigte Waschkufen und kann beispielsweise noch mit Weichmachern behandelt und anschließend getrocknet werden, bevor er aufgewickelt und weiterverarbeitet wird.

Die folgenden Beispiele dienen der näheren Erläuterung der Erfindung. Prozente sind darin Gewichtsprozente, soweit nicht anders angegeben.

**Vergleichsbeispiel**

5 kg gemahlener Holzzellstoff (Sulfitzellstoff MoDo Dissolving, Fa. MoDo) mit einem Durchschnittspolymerisationsgrad DP von 550, bestimmt nach der Cuoxam-Methode, wurde in 51 kg einer 60 %-igen NMMO-Lösung angemaischt. Durch Zugab e von NaOH wurde ein pH-Wert von 11 eingestellt. Unter Heizen und Rühren wurde dann im Vakuum bei 25 mbar mit steigender Temperatur $H_2O$ abdestilliert, bis eine NMMO-Konzentration von 87 % vorlag, bezogen auf das Gesamtgewicht des Lösemittels (entspricht Monohydrat des NMMO). Abschließend wurde 2 h bei einer Temperatur von 90 °C und einem Druck von 200 mbar weitergerührt, so dass der Zellstoff vollständig gelöst war. Diese Lösung wies einen Brechungsindex von 1.4887 auf.

Die so hergestellte Spinnlösung wurde bei einer Temperatur von 90 °C durch eine Ringspaltdüse mit einem Spaltdurchmesser von 20 mm und einer Spaltbreite von 0,5 mm extrudiert. Mit einer Geschwindigkeit von 20 m/min passierte der Folienschlauch zunächst eine Luftstrecke von 10 cm. Darin wurde er durch Druckluft querverstreckt. In das Schlauchinnere wurde ein stetig erneuertes Innenfällbad, bestehend aus einer 15 %igen NMMO-Lösung, die auf 5 °C abgekühlt war, eingebracht. Anschließend durchlief er eine Fällbadstrecke von 3 m, worin er auf halber Distanz umgelenkt wurde. Das Spinnbad enthielt eine Lösung gleicher Zusammensetzung und gleicher Konzentration und gleicher Temperatur wie das Innenfällbad. Der Schlauch war soweit querverstreckt, dass seine Flachbreite nach dem Verlassen der Spinnkufe 30 bis 41 mm betrug.

Der Folienschlauch passierte dann vier Waschkufen mit je 8 Umlenkwalzen oben und unten, einer Badtiefe von 1 m und einer Luftstrecke von 2 m. Am Ende der letzte Kufe wurde Wasser eingeleitet, das im Gegenstrom geführt wurde. Am Ausgang der ersten Kufe wurde derNMMO-Gehalt auf diese Weise bei 12 bis 16 % gehalten. Die Temperatur stieg bis auf 60 bis 70 °C in der letzten Kufe. Zum Schluß wurde der Schlauch durch eine Weichmacherkufe geführt, die eine 10 %-ige Glycerinlösung mit einer Temperatur von 60 °C enthielt.

Die Flachbreite betrug beim Verlassen der Weichmacherkufe noch 30 bis 41 mm. Zwischen zwei Quetschwalzen wurde der Schlauch dann mit Heißluft getrocknet. Der Trockner wies mehrere Zonen mit abnehmender Temperatur auf. Die Zone am Eingang hatte eine Temperatur von 120 °C, die am Ausgang von 80 °C. Danach wurde der Schlauch angefeuchtet, bis sein Wassergehalt bei 8 bis 12 % lag (bezogen auf das Gewicht der Cellulose). Der Platzdruck des Schlauches betrug 52 kPa, sein Quellwert 130 % und die maximale Rauigkeit der inneren Oberfläche der Schlauchfolie betrug 1,0 μm. Dieser Schlauch wies in unregelmäßigen Abständen Mängel durch Falten und Knicke auf, die z. T. beim Trocknen zu Luftverlusten führten und beim anschließenden Raffen zu hohen Produktionsausfällen führten.

Er wurde dann auf 16 bis 18 % angefeuchtet und zu Raupen gerafft, wobei eine Teilmenge zusätzlich mit einer easy-peel-Präparation ausgerüstet wurde. Die Raupen wurden auf einer automatischen Füllmaschine (FrankAMatic®) mit Würstchenbrät gefüllt,gebrüht und geräuchert. Danach wurde die Hülle mit einer automatisch arbeitenden Vorrichtung abgeschält. Hierbei wiesen die Raupen ohne easy-peel-Präparation ein mangelhaftes Schälverhalten auf, so dass die Würstchen mit Hülle die Schälmaschine verließen. Mit easy-peel-Präparation war das Schälverhalten gut.

Anhand der nach folgenden Bespiele 1 und 2 werden Ausführungsarten der Erfindung erläutert.

**Beispiel 1**

Eine entsprechend dem Vergleichsbeispiel hergestellte Spinnlösung wurde analog zu dem Vergleichsbeispiel versponnen. Im Gegensatz zu dem Vergleichsbeispiel wurde der extrudierte Folienschlauch durch ein 5 cm über dem Spinnbad befindliches in das Schlauchinnere eingebrachte und stetig erneuerte Innenfällbad, bestehend aus einer 15 %igen NMMO-Lösung, die auf 5°C abgekühlt war, behandelt. Die weitere Behandlung danach erfolgte entsprechend den Angaben im Vergleichsbeispiel. Die Flachbreite des Schlauches betrug 30 mm bis 41 mm nach dem Verlassen der Spinnkufe.

Die so hergestellte Wursthülle wies keine Falten mehr auf, so dass über die ganze Produktionslänge ein äußerlich einwandfreies Produkt erhalten wurde, welches beim Trocknen und Raffen keinerlei Probleme bereitete. Der Platzdruck lag bei 55 kPa, der Quellwert bei 140 %, die maximale Rauigkeit bei 1,15 μm. Diese Wursthülle konnte ohne easy-peel-Präparation nicht automatisch geschält werden. Das Schälverhalten mit easy-peel-Präparation war gut.

**Beispiel 2**

Eine entsprechend dem Vergleichsbeispiel hergestellte Spinnlösung wurde analog dem Vergleichsbeispiel versponnen. Im Gegensatz zum Vergleichsbeispiel wurde der extrudierte Folienschlauch durch ein 5 cm über dem Spinnbad befindliches in das Schlauchinnere eingebrachte und stetig erneuerte Innenfällbad, bestehend aus einer 20 %igen NMMO-Lösung, die auf 15 °C abgekühlt war, behandelt. Die Zusammensetzung des Spinnbades wurde gleich der des Innenfällbades gewählt. Die weitere Behandlung erfolgte entsprechend den Angaben im Vergleichsbeispiel.

Der auf diese Weise hergestellte Folienschlauch wies keine Falten auf, so dass über die ganze Produktionslänge ein äußerlich einwandfreies Produkt erhalten wurde, welches beim Trocknen und Raffen keinerlei Probleme bereitete. Der Platzdruck lag bei 50 kPa, der Quellwert bei 125 %, die maximale Rauigkeit bei 0,25 μm. Diese Wursthülle ließ sich auch ohne easy-peel-Präparation nach dem Brühen und Räuchern problemlos automatisch schälen.

Die mittlere Rauigkeit der Innenflächen der Wursthüllen der Beispiele 1 und 2 lag im Bereich von 5 bis 14 nm. Mit abnehmender maximaler Rauigkeit kann bei den erfindungsgemäßen Wursthüllen die easy-peel-Präparation verringert oder sogar weggelassen werden.

**Patentansprüche**

1. Verfahren zur Herstellung eines nahtlosen Folienschlauches (16) auf Cellulosebasis durch Extrudieren einer wässrigen Cellulose-N-methyl-morpholin-N-oxid-Spinnlösung durch eine Ringdüse (1) in ein Spinnbad (3), wobei die Spinnlösung zu dem Folienschlauch geformt wird, der in einer Luftstrek-ke (2) zwischen der Ringdüse und dem Pegel des Spinnbades durch einen Stützluftüberdruck im Fo-lienschlauch querverstreckt wird, **dadurch ge-kennzeichnet, dass** ein hydrostatischer Druck eines über dem Pegel des Spinnbades hinausragenden, im Inneren des Folienschlauches befindlichen Innenfällbades aus einer wässrigen NMMO-Lösung die Querverstreckung unterstützt und verstärkt, dass dem Innenfällbad wasserlösliche, die Oberflächenstruktur des Folienschlauches modifizierende Verbindungen zugesetzt werden, die bezogen auf den NMMO-Anteil, einen Anteil von 1 bis 100 Gew.-% haben und dass der durch die Querverstreckung aufgeweitete Folienschlauch mit konstantem Durchmesser das Spinnbad durchläuft, eine Umlenkung (15) im Spinnbad passiert, danach aus dem Spinnbad herausgeführt, gewaschen und mit Glycerin plastifiziert wird.

2. Verfahren nach Anspruch 1, **dadurch gekennzeichnet, dass** als modifizierende Verbindungen synthetische Polymere oder Copolymere aus Acrylsäureestern mit Acrylsäure, Methacrylsäureestem mit Methacrylsäure, Maleinsäureestern mit Maleinsäure sowie Acryl-, Methacrylamid, Vinylalkohol ausgewählt werden.

3. Verfahren nach Anspruch 1, **dadurch gekennzeichnet, dass** die modifizierenden Verbindungen aus der Gruppe Citronen-, Ascorbinsäure, Mal-todextrin, Sorbit, Manose, Glucose, Phosphon-atsalze, anorganische Salze, Gallensäureester ausgewählt werden.

4. Verfahren nach Anspruch 1, **dadurch gekennzeichnet, dass** für das Spinnbad und das Innenfällbad jeweils die gleiche wässrige NMMO-Lösung mit 5 bis 50 Gew.-%, insbesondere 15 bis 35 Gew.-% NMMO-Anteil verwendet wird.

5. Verfahren nach Anspruch 1, **dadurch gekennzeichnet, dass** der Verzug des Folienschlauches, gegeben durch den Quotienten Auströmgeschwindigkeit der Spinnlösung aus der Ringdüse zur Ab-zugsgeschwindigkeit des Folienschlauches, so ge-wählt wird, dass die Querverstreckung des Schlauchdurchmessers bis zu 30 % beträgt, bezogen auf den unverstreckten Durchmesser unmittelbar nach dem Schlauchaustritt aus der Ringdüse.

6. Verfahrennach Anspruch 1, **dadurch gekennzeichnet, dass** die Lösung des Innenfällbades durch die Ringdüse hindurch zuläuft und abgesaugt wird und das Zulaufen und Absaugen räumlich getrennt voneinander vorgenommen werden.

7. Verfahren nach Anspruch 6, **dadurch gekennzeichnet, dass** die Lösung des Innenfällbades durch ein Absaugrohr (11) innerhalb eines Rohres (12) abgesaugt wird, und dass die Absaugöffnung des Absaugrohres auf der Pegelhöhe des Innenfällbades im Folienschlauch angeordnet wird.

8. Verfahren nach Anspruch 6, **dadurch gekennzeichnet, dass** der Zulauf der Lösung des Innenfällbades höhenverstellbar innerhalb des in das Spinnbad eintauchenden Folienschlauches geregelt wird und dass die Absaugöffnung des Absaugrohres in einem Abstand von 30 bis 60 mm oberhalb des Pegels des Spinnbades (3) angebracht wird.

9. Verfahren nach Anspruch 1, **dadurch gekenn-**

zeichnet, dass der verstreckte Folienschlauch senkrecht zu der Oberfläche in das Spinnbad eintaucht, mit konstantem aufgeweitetem Durchmesser bis zur Umlenkung das Spinnbad durchläuft und im aufgeweiteten Zustand umgelenkt wird und dass der Folienschlauch nach der Umlenkung weitgehend frei von Falten unter einem Winkel von 10 bis 80 ° zur Horizontalen nach oben aus dem Spinnbad herausgeführt wird.

10. Verfahren nach Anspruch 1, **dadurch gekennzeichnet, dass** die NMMO-Konzentrationen des Spinnbades und des Innenfällbades zu Beginn der Extrusion des Folienschlauches gleich groß gewählt werden und dass durch stetige Erneuerung der Lösung des Innenfällbades dem Anstieg der NMMO-Konzentration in Richtung der Umlenkung innerhalb des Innenfällbades derart entgegengewirkt wird, dass die NMMO-Konzentration gleich/ kleiner der Anfangskonzentration gehalten wird.

11. Verfahren nach Anspruch 1, **dadurch gekennzeichnet, dass** die Ringdüse auf die Temperatur der Cellulose-NMMO-Spinnlösung von 85 bis 105 °C, insbesondere 90 bis 95 °C, aufgeheizt wird.

12. Verfahren nach Anspruch 1, **dadurch gekennzeichnet, dass** der Spinnlösung 0,2 bis 50 Gew.-%, insbesondere 0,5 bis 20 Gew.-%, jeweils bezogen auf das Cellulosegewicht, die innere Struktur des Folienschlauches und die Oberfläche des Folienschlauches modifizierende Verbindungen zugesetzt werden.

13. Verfahren nach Anspruch 12, **dadurch gekennzeichnet, dass** die innere Struktur des Folienschlauches modifizierenden Verbindungen aus der Gruppe Stärke, Cellulose, Stärke- oder Cellulosederivat, Zuckerester, Alginsäure oder Alginat, Chitosan, Carrageenan, Vinylalkohol, Polyvinylpyrrolidon, Copolymer aus Vinylpyrrolidon und 2-Dimethylamino-ethyl-methacrylat, Copolymer aus Methylvinylether und Maleinsäureanhydrid oder Copolymer aus Methylvinylether und Maleinsäuremonoalkylester ausgewählt werden.

14. Verfahren nach Anspruch 12, **dadurch gekennzeichnet, dass** die oberflächenverändernden Zusätze aus der Gruppe Bienenwachs, Carboxymethylstärke, Cellulosecarbamat, Gelatine, Xanthan, Carboxymethylcellulose, Glycerin-monolaurat, Na-Caseinat, Celluloseacetat, Weizen-, Soj aprotein, Derivate von Mono-, Di- oder Oligosacchariden, insbesondere Ester aus Zucker und Fettsäuren, Mono-, Di- und Triglyceride, Diketene mit allgemein geradkettigen, gesättigten $(C_{14}-C_{20})$Alkylresten, Wachse und/oder Paraffine ausgewählt werden.

15. Nahtloser Folienschlauch auf Cellulosebasis, herstellbar durch Extrudieren einer wässrigen Cellulose-NMMO-Spinnlösung, **dadurch gekennzeichnet, dass** der Folienschlauch(16) auf der Innenseite eine maximale Rauigkeit $R_{max}$ größer 0,1 µm bis 0,5 µm und eine mittlere Rauigkeit $R_m$ von 0,005 bis 0,014 µm hat und mit Glycerin plastifiziert ist.

16. Nahtloser Folienschlauch nach Anspruch 15, **dadurch gekennzeichnet, dass** die Cellulose einen Durchschnittspolymerisationsgrad DP von 300 bis 700, bevorzugt von 400 bis 650, aufweist.

17. Nahtloser Folienschlauch nach Anspruch 15, **dadurch gekennzeichnet, dass** sich an der Oberfläche des Folienschlauches im Kontakt mit einem Elektrolyten eine elektrische Ladungsdichte ausbildet, der ein elektrokinetisches Potential, das ζ-Potential, entspricht, das im pH-Bereich von 6 bis 10,5 des Elektrolyten im Bereich von -15 bis -25 mV und im pH-Bereich von 3,5 bis 5,5 des Elektrolyten im Bereich von +5 bis -15 mV liegt.

18. Nahtloser Folienschlauch nach Anspruch 15, **dadurch gekennzeichnet, dass** der Folienschlauch mit einer easy-peel Präparation aus 1 bis 2 Gew.-% Carboxymethylcellulose, 0,5 bis 1,5 Gew.-% Sorbitan-trioleat bezogen auf Carboxymethylcellulose, 0,5 bis 1 Gew.-% eines Gemisches aus Mono- und Diglyceriden und dem Rest Wasser innen imprägniert ist und dass mit abnehmender maximaler Rauigkeit die easy-peel Präparation verringerbar ist.

19. Nahtloser Folienschlauch nach Anspruch 15, **dadurch gekennzeichnet, dass** der Folienschlauch mit einer Flüssigrauchpräparation aus 35 bis 39 Gew.-% Flüssigrauch, 1 bis 10 Gew.-% Lecithin, einer oder mehreren Komponenten aus der Gruppe NaOH mit 3 bis 5 Gew.-%, Alginat mit 1,5 bis 2 Gew.-%, Polyethylenglykol-monoalkylether mit 2 bis 3 Gew.-% und Chromfettsäure-Komplex mit 1 bis 2 Gew.-% mit $C_{14}-C_{18}$ Alkylresten und dem Rest Wasser auf der Innenseite ausgerüstet ist.

20. Nahtloser Folienschlauch nach Anspruch 15, **dadurch gekennzeichnet, dass** der mit Glycerin plastifizierte Folienschlauch eine Restfeuchte von 8 bis 12 Gew.-% aufweist.

**Claims**

1. Method for producing a seamless tubular film (16) based on a cellulose base by extruding an aqueous cellulose-N-methyl-morpholine-N-oxide spinning solution through an annular die (1) in a spinning bath (3), whereby the spinning solution is formed to the tubular film, which is laterally drawn in an air gap (2) between the annular die and the level of the spinning bath by stabilizing air pressure in the tubular film, **characterized in that** a hydrostatic pressure from an inner spinning solution comprising an aqueous cellulose-N-methyl-morpholine-N-oxide solution formed inside the tubular film is extending above the level of the spinning bath, supports and intensifies the lateral drawing; wherein watersoluble compounds designed to modify the surface structure of the tubular film are added to the inner spinning solution in a ratio of 1 to 100 % by weight based upon the weight of cellulose-N-methyl-morpholine-N-oxide and wherein the tubular film that has been expanded by the lateral drawing process is running through the spinning bath with constant diameter and is passing a turning point in the spinning bath, subsequently directing the film out of said spinning bath and plasticizing with glycerin.

2. Method as claimed in claim 1, wherein are selected as modifying compounds synthetic polymers or copolymers of acrylic acid esters with acrylic acid, methacrylic acid esters with methacrylic acid, maleic acid esters with maleic acid, and acrylamide, methacrylamide, vinyl alcohol.

3. Method as claimed in claim 1, wherein the modifying compounds are selected from the group consisting of citric acid, ascorbic acid, maltodextrin, sorbitol, manose, glucose, phosphonate salts, inorganic salts, gallic acid ester.

4. Method as claimed in claim 1, wherein the spinning bath and the inner spinning solution comprise the same aqueous cellulose-N-methyl-morpholine-N-oxide solution of 5 to 50 % by weight, in particular 15 to 35 % by weight, cellulose-N-methyl-morpholine-N-oxide.

5. Method as claimed in claim 1, wherein the lateral drawing of the tubular film is conducted at least in part based on the ratio of the discharge velocity of the spinning bath from the spinning die to the drawing rate of the tubular film, such that the lateral drawing of the tubular diameter amounts to up to 30%, relative to the diameter of undrawn tubular film, measured immediately after the tubular film has exited the spinning die.

6. Method as claimed in claim 1, wherein the solution of the inner spinning solution is supplied and drained off through the annular die, and wherein the supplying and removal by suction are accomplished spatially separated from each other.

7. Method as claimed in claim 6, wherein the solution of the inner spinning solution is drained off through a suction tube (11) inside a pipe (12), and wherein an exhaust opening of the suction tube is positioned at the same height as the inner spinning solution in the tubular film.

8. Method as claimed in claim 6, regulating the supply of the solution of the inner spinning solution by adjusting the height of said solution within the tubular film that is immersed in the spinning bath, and wherein the exhaust opening of the suction tube is positioned 30 to 60 mm above the level of the spinning bath (3).

9. Method as claimed in claim 1, wherein the drawn tubular film is immersed in the spinning bath, perpendicular to the surface of the spinning bath, such that the tubular film traverses the spinning bath with a constantly expanded diameter up to the turning point, and is turned in an expanded state; and wherein after the turning point, the tubular film is essentially free from folds and is directed upward, out of the spinning bath, at an angle of 10 to 80° from horizontal.

10. Method as claimed in claim 1, wherein the cellulose-N-methyl-morpholine-N-oxide concentration of the spinning bath and that of the inner spinning solution are initially the same at the start of the tubular film extrusion, and wherein renewal of the inner spinning solution counters any increase in cellulose-N-methyl-morpholine-N-oxide concentration in the inner spinning solution toward the turning point, such that the cellulose-N-methyl-morpholine-N-oxide concentration of said spinning bath is maintained at the same or less than the initial concentration.

11. Method as claimed in claim 1, wherein the annular die is heated to a temperature of 85 to 105°C, in particular of 90 to 95 °C.

12. Method as claimed in claim 1, wherein compounds modifying the internal structure of the tubular film and its surface are added to the spinning solution in an amount of 0.2 to 50 % by weight, in particular of 0,5 to 20 % by weight, based upon the weight of the cellulose.

13. Method as claimed in claim 12, wherein compounds modifying the internal structure of the tubular film are selected from the group consisting of starches, cellulose, starches or cellulose derivatives, sugar esters, alginic acid or alginate, chitosan, carrageenan, vinyl alcohol, polyvinyl pyrrolidone, copolymers of vinyl pyrrolidone and 2-dimethylamino-ethyl-methacrylate, copolymers of methylvinyl ether and maleic acid anhydride, or copolymers of methylvinylether and maleic acid monoalkylesters.

**14.** Method as claimed in claim 12, wherein the surface-altering additives are selected from the group consisting of beeswax, carboxymethyl starches, cellulose carbamate, gelatins, xanthan, carboxymethylcellulose, glycerin-monolaurate, Na-caseinate, cellulose acetate, wheat protein, soy protein, derivatives of mono-, di-, or oligosaccharides, especially esters from sugar and fatty acids, mono-, di-, and triglycerides, diketenes having generally straight-chain, saturated ($C_{14}$-$C_{20}$) alkyl residues, waxes, and/or paraffins.

**15.** Seamless tubular film comprising a cellulose base, that has been produced by extruding an aqueous cellulose-N-methyl-morpholine-N-oxide spinning solution, wherein said tubular film (16) possesses on the inside a maximum degree of roughness $R_{max}$ that is from greater than 0,1 µm to 0,5 µm, and an average degree of roughness $R_m$ of 0,005 to 0,014 µm, and is plasticized with glycerin.

**16.** Seamless tubular film as claimed in claim 15, wherein the average degree of polymerization DP of the cellulose is 300 to 700, preferred 400 to 650.

**17.** A seamless tubular film as claimed in claim 15, wherein an electric charge density forms on the surface of the tubular film when it comes in contact with an electrolyte; said electric charge density corresponding to an electrokinetic potential, the ζ-potential, which measures -15 to -25 mV if the pH value of the electrolyte is between 6 and 10,5, and measures +5 to -15 mV if the pH value of the electrolyte is between 3,5 and 5,5.

**18.** Seamless tubular film as claimed in claim 15, wherein the tubular film is impregnated on its inner surface with an easy-peel preparation comprising of 1 to 2 % by weight carboxymethylcellulose, 0,5 to 1,5 % by weight sorbitol-trioleate based upon carboxymethylcellulose, 0,5 to 1 % by weight of a mixture of mono- and diglycerides, and balance is water and wherein with decreasing maximum roughness the easy-peel preparation can be reduced.

**19.** Seamless tubular film as claimed in claim 15, wherein the tubular film is provided on an inner surface thereof with a liquid smoke preparation comprising of 35 to 39 % by weight liquid smoke, 1 to 10 % by weight lecithin, 3 to 5 % by weight of one or more components selected from the group consisting of NaOH, 1,5 to 2 % by weight alginate, 2 to 3 % by weight polyethylene glycol-monoalkyl ether, and 1 to 2 % by weight chromic fatty acid complex with $C_{14}$-$C_{18}$ alkyl residues, and the balance is water.

**20.** Seamless tubular film as claimed in claim 15, wherein the tubular film that has been plasticized with glycerin exhibits a residual moisture of 8 to 12 % by weight.

## Revendications

**1.** Procédé pour la fabrication d'un film tubulaire (16) sans joint, à base de cellulose, par extrusion d'une solution aqueuse de filage de cellulose-N-méthyl-morpholine-N-oxyde à travers une filière annulaire (1) dans un bain de filage (3), la solution de filage étant formée en film tubulaire qui est étiré transversalement par une surpression d'air de soutien dans un espace d'air (2) entre la filière annulaire et le niveau du bain de filage, **caractérisé en ce qu'**une pression hydrostatique d'un bain coagulant interne, consistant en une solution aqueuse de NMMO, se trouvant à l'intérieur du film tubulaire et s'élevant au-dessus du niveau du bain de filage, soutient et accentue l'étirage transversal, **en ce que** sont ajoutés au bain coagulant interne des composés hydrosolubles modifiant la texture superficielle du film tubulaire, qui ont une concentration de 1 à 100 % en poids par rapport à la teneur en NMMO, et **en ce que** le film tubulaire élargi par l'étirage transversal traverse le bain de filage avec un diamètre constant, passe sur un galet de renvoi (15) dans le bain de filage, puis est extrait du bain de filage, lavé et plastifié avec du glycérol.

**2.** Procédé selon la revendication 1, **caractérisé en ce qu'**on choisit en tant que composés modificateurs des polymères ou copolymères synthétiques d'esters d'acide acrylique et d'acide acrylique, d'esters d'acide méthacrylique et d'acide méthacrylique, d'esters d'acide maléique et d'acide maléique, ainsi que d'acrylamide, de méthacrylamide, d'alcool vinylique.

**3.** Procédé selon la revendication 1, **caractérisé en ce qu'**on choisit les composés modificateurs dans le groupe constitué par l'acide citrique, l'acide ascorbique, la maltodextrine, le sorbitol, le mannose, le glucose, les sels d'acide phosphonique, des sels minéraux, des esters d'acides biliaires.

**4.** Procédé selon la revendication 1, **caractérisé en ce qu'**on utilise pour le bain de filage et le bain coagulant interne la même solution aqueuse de NMMO ayant une teneur en NMMO de 5 à 50 % en poids, en particulier de 15 à 35 % en poids.

**5.** Procédé selon la revendication 1, **caractérisé en ce que** l'étirage du film tubulaire, donné par le quotient de la vitesse de la solution de filage à la sortie de la filière annulaire par la vitesse de réception du film tubulaire, est choisie de manière que l'extension transversale du diamètre du tube aille jusqu'à 30 %, par rapport au diamètre avant extension, immédiatement après la sortie du tube hors de la filière annulaire.

6. Procédé selon la revendication 1, **caractérisé en ce que** la solution du bain coagulant interne passe dans la filière annulaire et est aspirée et **en ce que** le passage et l'aspiration sont effectués séparément de manière spatialement.

7. Procédé selon la revendication 6, **caractérisé en ce que** la solution du bain coagulant interne est aspirée par un tube d'aspiration (11) à l'intérieur d'un tube (12), et **en ce que** l'orifice d'aspiration du tube d'aspiration est placé à la hauteur du niveau du bain coagulant interne dans le film tubulaire.

8. Procédé selon la revendication 6, **caractérisé en ce que** l'alimentation de la solution du bain coagulant interne pouvant être réglé en hauteur à l'intérieur du film tubulaire plongeant dans le bain de filage est réglé et **en ce que** l'orifice d'aspiration du tube d'aspiration est placé à une distance de 30 à 60 mm au-dessus du niveau du bain de filage (3).

9. Procédé selon la revendication 1, **caractérisé en ce que** le film tubulaire étiré plonge perpendiculairement à la surface dans le bain de filage, traverse le bain de filage avec un diamètre élargi constant jusqu'au galet de renvoi et est dévié à l'état élargi et **en ce qu'**après le galet de renvoi le film tubulaire, pratiquement dépourvu de plis, est extrait du bain de filage vers le haut sous un angle de 10 à 80° par rapport à l'horizontale.

10. Procédé selon la revendication 1, **caractérisé en ce que** les teneurs en NMMO du bain de filage et du bain coagulant interne sont choisies de même valeur au début de l'extrusion du film tubulaire et **en ce qu'**on s'oppose à l'élévation de la concentration de NMMO en direction du galet de renvoi dans le bain coagulant interne, par constant renouvellement de la solution du bain coagulant interne, de manière à maintenir la concentration de NMMO égale/inférieure à la concentration initiale.

11. Procédé selon la revendication 1, **caractérisé en ce que** la filière annulaire est portée à la température de la solution de filage de cellulose-NMMO de 85 à 105°C, en particulier de 90 à 95°C.

12. Procédé selon la revendication 1, **caractérisé en ce qu'**on ajoute à la solution de filage 0,2 à 50 % en poids, en particulier 0,5 à 20 % en poids, chaque fois par rapport au poids de cellulose, de composés modifiant la texture interne du film tubulaire et la surface du film tubulaire.

13. Procédé selon la revendication 12, **caractérisé en ce que** les composés modifiant la texture interne du film tubulaire sont choisis dans le groupe constitué par l'amidon, la cellulose, un dérivé d'amidon ou de cellulose, un ester à base de sucre, l'acide alginique ou un alginate, le chitosane, le carraghénane, l'alcool vinylique, la polyvinylpyrrolidone, un copolymère de vinylpyrrolidone et méthacrylate de 2-diméthylaminoéthyle, un copolymère d'éther méthylvinylique et anhydride maléique ou un copolymère d'éther méthylvinylique et maléate de monoalkyle.

14. Procédé selon la revendication 12, **caractérisé en ce que** les additifs modifiant la surface sont choisis dans le groupe constitué par la cire d'abeille, le carboxyméthylamidon, le carbamate de cellulose, la gélatine, le xanthane, la carboxyméthylcellulose, le monolaurate de glycérol, le caséinate de Na, l'acétate de cellulose, la protéine de soja et de blé, des dérivés de mono-, di- ou oligosaccharides, en particulier des esters à base de sucres et d'acides gras, des mono-, di- et triglycérides, des dicétènes à radicaux alkyle en $C_{14}$-$C_{20}$ saturés, en général à chaîne droite, des cires et/ou des paraffines.

15. Film tubulaire sans joint à base de cellulose, pouvant être produit par extrusion d'une solution aqueuse de cellulose-NMMO, **caractérisé en ce que** le film tubulaire (16) présente sur la face interne une rugosité maximale $R_{max}$ de plus de 0,1 µm à 0,5 µm et une rugosité moyenne $R_m$ de 0,005 à 0,014 et est plastifié avec du glycérol.

16. Film tubulaire sans joint selon la revendication 15, **caractérisé en ce que** la cellulose présente un degré moyen de polymérisation DP de 300 à 700, de préférence de 400 à 650.

17. Film tubulaire sans joint selon la revendication 15, **caractérisé en ce qu'**il se forme à la surface du film tubulaire, en contact avec un électrolyte, une densité de charge électrique qui correspond à un potentiel électrocinétique, le potentiel ζ, qui se situe dans la plage de -15 à -25 mV dans l'intervalle de pH de 6 à 10,5 de l'électrolyte et dans la plage de +5 à -15 mV dans l'intervalle de pH de 3,5 à 5,5 de l'électrolyte.

18. Film tubulaire sans joint selon la revendication 15, **caractérisé en ce que** le film tubulaire est imprégné à l'intérieur d'une préparation pour pelage facile *easy-peel* composée de 1 à 2 % en poids de carboxyméthylcellulose, 0,5 à 1,5 % en poids de trioléate de sorbitanne par rapport à la carboxyméthylcellulose, 0,5 à 1 % en poids d'un mélange de mono- et diglycérides et pour le reste d'eau, et **en ce que** la quantité de la préparation *easy-peel* peut être diminuée avec une rugosité maximale décroissante.

19. Film tubulaire sans joint selon la revendication 15, **caractérisé en ce que** le film tubulaire est traité sur la face interne par une préparation de fumée liquide constituée de 35 à 39 % en poids de fumée liquide, 1 à 10 % en poids de lécithine, d'un ou plusieurs composants choisis dans le groupe constitué par NaOH à 3-5 % en poids, d'un alginate à 1,5-2 % en poids, d'un éther monoalkylique de polyéthylèneglycol à 2-3 % en poids et d'un complexe de chrome et d'acide gras à 1-2 % en poids, comportant des radicaux alkyle en $C_{14}$-$C_{18}$, et pour le reste d'eau.

20. Film tubulaire sans joint selon la revendication 15, **caractérisé en ce que** le film tubulaire plastifié avec du glycérol présente une humidité résiduelle de 8 à 12 % en poids.

FIG.1

FIG. 2

FIG. 3